# EUROPEAN PATENT APPLICATION

(11) **EP 4 685 893 A1**
(43) Date of publication of application: **28.01.2026**
(21) Application number: 24874987.1
(22) Date of filing: 04.10.2024
(51) Int. Cl.: H01M 10/04

(54) **ELECTRODE ASSEMBLY MANUFACTURING APPARATUS AND ELECTRODE ASSEMBLY MANUFACTURING METHOD**

(30) Priority: 06.10.2023 KR 20230133634; 08.07.2024 KR 20240089906
(71) Applicant: LG Energy Solution, Ltd., Seoul 07335 (KR)
(72) Inventor: BAE, Ho Jin, Daejeon 34122 (KR)
(74) Representative: Goddar, Heinz J.
(86) International application number: PCT/KR2024/015093
(87) International publication number: WO 2025/075431

(57) **Abstract**

The present disclosure relates to an electrode assembly manufacturing device and an electrode assembly manufacturing method that may improve the efficiency and economic feasibility of the process by reducing the amount of discarded film in the electrode assembly manufacturing process.

An electrode assembly manufacturing device according to the present disclosure may include a separator winding unit from which a separator and a protective film in a wound form may be unwound, a separator providing unit configured to provide the separator unwound from the separator winding unit, an electrode supply unit for supplying electrodes to the separator at regular intervals, and a film providing unit configured to provide the protective film unwound from the separator winding unit to the electrode or the separator.

## Description

### TECHNICAL FIELD

### CROSS-REFERENCE TO RELATED APPLICATIONS

The present application claims priority to Korean Patent Application No. 10-2023-0133634 filed on October 6, 2023 and Korean Patent Application No. 10-2024-0089906 filed on July 8, 2024 in the Republic of Korea, the disclosures of which are incorporated herein by reference.

### TECHNICAL FIELD

The present disclosure relates to an electrode assembly manufacturing device and an electrode assembly manufacturing method, and more specifically, to an electrode assembly manufacturing device for manufacturing an electrode assembly used in the manufacture of a secondary battery that can be charged and discharged, and an electrode assembly manufacturing method using the same.

### BACKGROUND ART

Recently, the depletion of fossil fuels forces to increase the price of energy sources and has strong impact on the growing attention towards environmental pollution, and the need for eco-friendly alternative energy sources is an essential factor for future life. In this context, a variety of energy generation technologies including solar energy, wind energy, tidal energy and the like are being studied, and attention is directed to energy storage systems such as batteries to make use of the produced electrical energy more efficiently.

Moreover, as the technology development and demand for electronic mobile devices and electric vehicles using batteries increase, the demand for batteries as an energy source is rapidly increasing, and accordingly, many studies are being conducted on batteries that meet a variety of needs.

Batteries that store electrical energy may be generally divided into primary batteries and secondary batteries. Primary batteries are disposable consumable batteries, whereas secondary batteries are rechargeable batteries manufactured using materials in which the oxidation and reduction processes between current and substances are repeatable. That is, when a reduction reaction is performed on a material by current, the power is charged, and when an oxidation reaction is performed on a material, the power is discharged, and electricity is generated while such charging and discharging are repeatedly performed.

Secondary batteries may be classified into cylindrical cells, pouch cells, prismatic cells, and the like according to their shapes. Even though the shape is different, an electrode assembly disposed inside the exterior material is required to manufacture a secondary battery. The electrode assembly may include a positive electrode, a negative electrode, and a separator. The electrode assembly may have various shapes, such as a shape in which the positive electrode, the negative electrode, and the separator are wound together, a shape in which they are stacked side by side, and the like.

Meanwhile, the separator used in the manufacturing process of the electrode assembly may be provided by being unwound together with the protective film. In this case, the protective film that was wound together with the separator may be recovered and discarded. Additionally, another film may be provided when laminating the electrode and the separator.

In the prior art, since the protective film wound together to protect the separator was discarded and an additional film used in the electrode assembly manufacturing process was provided, there was a problem of poor process efficiency and economic feasibility.

Therefore, there is a need for an electrode assembly manufacturing device and an electrode assembly manufacturing method that may improve the efficiency and economic feasibility of the process by reducing the amount of discarded film in the electrode assembly manufacturing process.

### SUMMARY

### TECHNICAL PROBLEM

The present disclosure to providing an electrode assembly manufacturing device and an electrode assembly manufacturing method that may improve the efficiency and economic feasibility of the process by reducing the amount of discarded film in the electrode assembly manufacturing process.

### TECHNICAL SOLUTION

An electrode assembly manufacturing device according to the present disclosure may include a separator winding unit from which a separator and a protective film in a wound form may be unwound, a separator providing unit configured to provide the separator unwound from the separator winding unit, an electrode supply unit for supplying electrodes to the separator at regular intervals, and a film providing unit configured to provide the protective film unwound from the separator winding unit to the electrode or the separator.

The electrode may include a first electrode and a second electrode, and the electrode supply unit may further include a first electrode moving unit configured to move the first electrode in accordance with the speed at which the separator is provided by the separator providing unit, and a second electrode moving unit configured to move the second electrode so that the second electrode is disposed on the opposite side of the first electrode based on the separator provided by the separator providing unit.

The separator winding unit may include a first separator winding unit and a second separator winding unit that are disposed to be spaced apart from each other.

The separator providing unit may include a first separator providing unit configured to dispose the separator unwound from the first separator winding unit on one surface of the moving first electrode, and a second separator providing unit configured to dispose the separator unwound from the second separator winding unit on one surface of the moving second electrode.

The film providing unit may include a first film providing unit configured to dispose the protective film on one surface of the separator coupled to one surface of the first electrode, and a second film providing unit configured to dispose the protective film on the other surface of the second electrode, wherein the protective films may be provided to be disposed on both surfaces of the assembly composed of the first electrode, the second electrode, and the separator.

The electrode assembly manufacturing device may further include a heater configured to apply heat to the assembly in which the protective films are disposed on both surfaces.

The electrode assembly manufacturing device may further include pressing rolls configured to press the assembly heated by the heater on both surfaces to couple the first electrode, the second electrode, and the separator to each other.

The electrode assembly manufacturing device may further include a film recovery unit configured so that the protective film disposed on both surfaces of the assembly pressed by the pressing roll may be recovered.

The film recovery unit may include a first film recovery unit configured so that the protective film provided from the first film providing unit may be recovered, and a second film recovery unit configured so that the protective film provided from the second film providing unit may be recovered.

The electrode assembly manufacturing device may further include a first film winding unit configured to wind the protective film recovered from the first film recovery unit, and a second film winding unit configured to wind the protective film recovered from the second film recovery unit.

The electrode assembly manufacturing device may further include a cutting unit configured to cut the assembly from which the protective film has been recovered to a preset length.

The film providing unit may include a plurality of film rolls configured to guide the protective film unwound from the separator winding unit by rotation.

The film roll may be configured to change the moving direction of the protective film.

The electrode assembly manufacturing device may further include a first electrode cutter configured to cut the first electrode moved by the first electrode moving unit to a preset length, and a second electrode cutter configured to cut the second electrode moved by the second electrode moving unit to a preset length.

An electrode assembly manufacturing method according to the present disclosure is a method for manufacturing an electrode assembly including a first electrode, a second electrode, and a separator, and may include a step of stacking the separator provided from a separator winding unit in which the separator and the protective film are wound between the moving first electrode and second electrode, a step of stacking the protective film provided from the separator winding unit to be disposed on the outer surface of the assembly in which the first electrode, the second electrode, and the separator are stacked, a step of laminating the assembly covered with the protective film, and a step of recovering the protective film disposed on the outer surface of the laminated assembly.

### ADVANTAGEOUS EFFECTS

According to a preferred embodiment of the present disclosure, the amount of discarded film may be reduced by reusing the film wound together with the separator.

Through this, the efficiency and economic feasibility of the electrode assembly manufacturing process may be improved.

Additionally, it can be applied to the manufacture of various types of electrode assemblies while minimizing the replacement of equipment.

Additionally, damage to the electrode and the separator may be prevented in the electrode assembly manufacturing process.

The effects according to the present disclosure are not limited by the contents exemplified above, and more various effects are included in this specification.

### BRIEF DESCRIPTION OF THE DRAWINGS

FIG. 1 is a perspective view schematically showing an electrode assembly manufacturing device according to Embodiment 1 of the present disclosure.
FIG. 2 is a side view schematically showing an electrode assembly manufacturing device according to Embodiment 1 of the present disclosure.
FIG. 3 is a side view schematically showing an electrode assembly manufacturing device according to Embodiment 2 of the present disclosure.
FIG. 4 is a flow chart schematically showing an electrode assembly manufacturing method according to Embodiment 3 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Embodiment 1

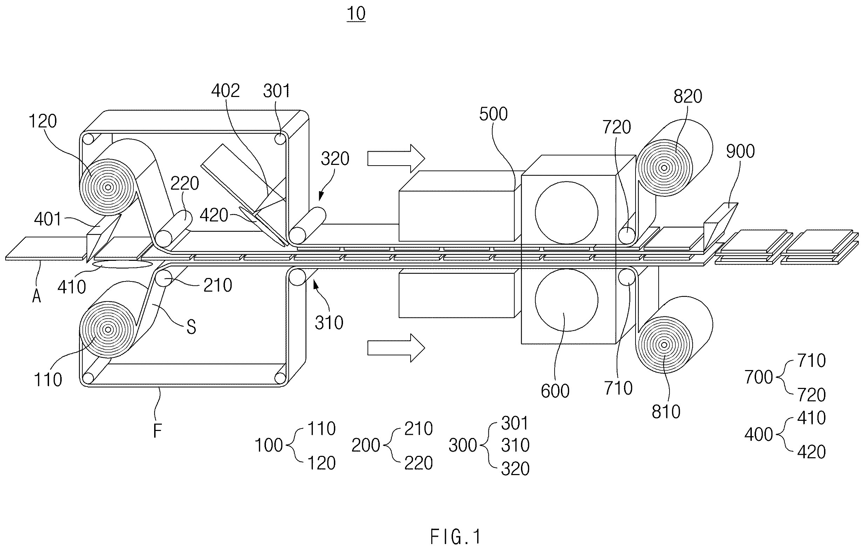

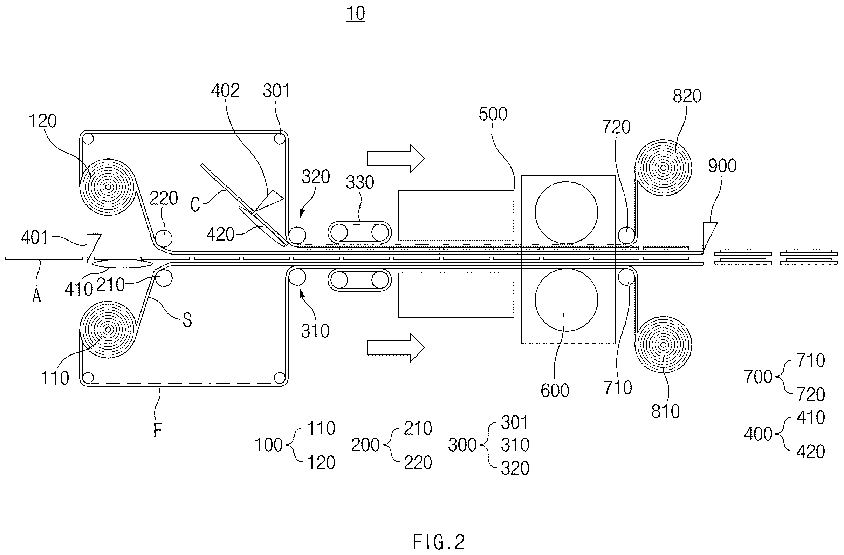

FIG. 1 is a perspective view schematically showing an electrode assembly manufacturing device 10 according to Embodiment 1 of the present disclosure, and FIG. 2 is a side view schematically showing an electrode assembly manufacturing device 10 according to Embodiment 1 of the present disclosure. In this case, the transfer unit 330 is not shown in FIG. 1.

The electrode assembly manufacturing device 10 according to the present disclosure may mean a device for manufacturing an electrode assembly used in the manufacture of a secondary battery that can be charged and discharged. That is, the electrode assembly manufacturing device 10 may mean a device for manufacturing an electrode assembly including a positive electrode, a negative electrode, and a separator. Here, when manufacturing a secondary battery, the electrode assembly may be disposed in a form of being accommodated inside an exterior material. Specifically, the electrode assembly and electrolyte solution may be accommodated inside the exterior material, and the secondary battery may be manufactured when the exterior material is sealed.

Additionally, the electrode assembly manufacturing device 10 according to Embodiment 1 of the present disclosure may mean a device for manufacturing a stack of electrodes and separators required in the process of manufacturing an electrode assembly in which a plurality of electrodes and separators are stacked. The form of the electrode assembly manufacturing device 10 according to Embodiment 1 of the present disclosure is only one example, and may be applied to various types of electrode assembly manufacturing processes.

Referring to FIGS. 1 and 2, the electrode assembly manufacturing device 10 according to Embodiment 1 of the present disclosure may include a separator winding unit 100, a separator providing unit 200, a film providing unit 300, and an electrode supply unit 400.

The separator winding unit 100 may include a separator S and a protective film F in a wound form. Specifically, the separator winding unit 100 may be in a form in which the protective film F disposed on the surface of the separator S is wound together with the separator S to protect the separator S. That is, the separator winding unit 100 may have a roll form in which the separator S and the protective film F in the form of a sheet are wound.

The separator providing unit 200 may guide the transfer of the separator S unwound from the separator winding unit 100. In other words, the separator providing unit 200 may be configured so that the separator S unwound from the separator winding unit 100 may be provided to the electrode to be described later.

For example, the separator providing unit 200 may guide the transfer direction of the separator S toward the electrode. As a result, the separator S may be provided to the electrode. At this time, in this embodiment, the driving force for unwinding and transferring the separator S in the separator winding unit 100 may be a force by the transfer unit 330 to be described later, but is not limited thereto. For example, the driving force for transferring the separator S may be generated from the separator providing unit 200.

The electrode supply unit 400 may supply electrodes to the separator S at regular intervals. The electrodes may include a first electrode A and a second electrode C. Here, the first electrode A and the second electrode C may be a negative electrode or a positive electrode. The method by which the electrode supply unit 400 supplies the electrodes may vary, and in the present disclosure, a form in which the electrode supply unit 400 supplies and moves the electrodes using a conveyor belt is described as an example.

Conventionally, a film wound together with the separator S to protect the separator S was discarded after being unwound for the provision of the separator S. Therefore, a process for recovering the film is required, which reduces the efficiency of the process, and the economic feasibility of the process is also reduced by the discarded film.

As an example of a configuration to prevent the film from being discarded, the electrode assembly manufacturing device 10 according to Embodiment 1 of the present disclosure may include a film providing unit 300.

The film providing unit 300 may guide the protective film F unwound from the separator winding unit 100. Specifically, the film providing unit 300 may be configured so that the protective film F unwound from the separator winding unit 100 may be provided to the electrode or the separator S. That is, in the electrode assembly manufacturing device 10 according to Embodiment 1 of the present disclosure, the protective film F wound together with the separator S may be guided to the electrode or the separator S side through the film providing unit 300 to protect the separator S. The protective film F provided to the electrode or the separator S may prevent damage and sagging of the electrode and the separator S during the electrode assembly manufacturing process. At this time, in this embodiment, the driving force for unwinding and transferring the protective film F in the separator winding unit 100 may be a force by the transfer unit 330 to be described later, but is not limited thereto. For example, the driving force for transferring the protective film F may be generated from the film providing unit 300.

Hereinafter, the shape of each configuration will be described in detail.

The electrode supply unit 400 of the electrode assembly manufacturing device 10 may include a first electrode moving unit 410 and a second electrode moving unit 420. The first electrode moving unit 410 may be configured to move the first electrode A in accordance with the speed at which the separator S is provided by the separator providing unit 200. Additionally, the second electrode moving unit 420 may be configured to move the second electrode C so that the second electrode C is disposed on the opposite side of the first electrode A based on the separator S provided by the separator providing unit 200. That is, the separator S may be disposed between the first electrode A and the second electrode C. Specifically, the assembly including the first electrode A, the second electrode C, and the separator S may move with the separator S disposed between the first electrode A and the second electrode C.

The moving electrode may move together with the separator S after being cut to a preset length. Here, to cut the moving electrode to a preset length, the electrode assembly manufacturing device 10 may further include a first electrode cutter 401 and a second electrode cutter 402. Specifically, the first electrode cutter 401 may cut the first electrode A moved by the first electrode moving unit 410 to a preset length. Additionally, the second electrode cutter 402 may cut the second electrode C moved by the second electrode moving unit 420 to a preset length. At this time, the method by which the first electrode cutter 401 and the second electrode cutter 402 cut the electrode may vary.

The separator winding unit 100 may include a first separator winding unit 110 and a second separator winding unit 120 that are disposed to be spaced apart from each other. In the present disclosure, a case where the second separator winding unit 120 is disposed on the opposite side of the first separator winding unit 110 based on the moving first electrode A is described as an example.

The first separator providing unit 210 may be configured to provide the separator S unwound from the first separator winding unit 110 so that the separator S is disposed on one surface of the moving first electrode A. Additionally, the second separator providing unit 220 may be configured to provide the separator S unwound from the second separator winding unit 120 so that the separator S is disposed on one surface of the moving second electrode C. Specifically, the separator S unwound from the first separator winding unit 110, the first electrode A, the separator S unwound from the second separator winding unit 120, and the second electrode C may be stacked in this order. As an example, the first and second separator providing units 210, 220 may include guide rollers, but the configuration of the separator providing unit 200 is not limited thereto.

As described above, to protect the assembly in which the separator S, the first electrode A, and the second electrode C are stacked, the film providing unit 300 of the electrode assembly manufacturing device 10 according to Embodiment 1 of the present disclosure may provide the protective film F unwound from the separator winding unit 100 to the assembly.

In this regard, the film providing unit 300 may include a first film providing unit 310 and a second film providing unit 320. The first film providing unit 310 may provide the protective film F so that the protective film F is disposed on one surface of the separator S coupled to one surface of the first electrode A. Additionally, the second film providing unit 320 may provide the protective film F so that the protective film F is disposed on the other surface of the second electrode C.

Therefore, the protective film F may be provided to be disposed on both surfaces of the assembly composed of the first electrode A, the second electrode C, and the separator S. Specifically, the separator S disposed on one surface of the first electrode A may have the protective film F disposed on the other surface, and the first electrode A may be disposed on one surface. Additionally, the second electrode C may have the separator S disposed on one surface and the protective film F disposed on the other surface.

Since the protective film F is disposed on both surfaces of the assembly composed of the first electrode A, the second electrode C, and the separator S during the electrode assembly manufacturing process, the electrode and the separator S may be prevented from being damaged. Additionally, since the protective film F maintains the shape of the assembly, the electrode and the separator S may be prevented from sagging during the manufacturing process.

The first film providing unit 310 and the second film providing unit 320 of the film providing unit 300 may each include a plurality of film rolls 301. The film rolls 301 may change the transfer direction of the protective film F. For example, the film rolls 301 may have a cylindrical shape.

The laminating process for manufacturing the assembly composed of the first electrode A, the second electrode C, and the separator S into an electrode assembly may require heat and pressure.

To provide heat required for the laminating process, the electrode assembly manufacturing device 10 may further include a heater 500. The heater 500 may be configured to apply heat to the assembly in which the protective film F is disposed on both surfaces. Specifically, the heaters 500 may be configured as a pair and disposed on each of both surfaces of the moving assembly.

To provide the pressure required for the laminating process, the electrode assembly manufacturing device 10 may further include a pressing roll 600. The pressing roll 600 may be configured to apply pressure to the assembly that has been provided with heat by the heater 500. Specifically, the pressing rolls 600 may be configured as a pair and disposed on both surfaces of the moving assembly, respectively. Additionally, the pressing roll 600 may be a roughly cylindrical roll in the form of pressing the assembly through rotation. This is only one example, and the pressing roll 600 may press the assembly in other ways.

After the assembly is laminated by the heater 500 and the pressing roll 600, the protective film F disposed on both surfaces of the assembly is no longer necessary and thus may be recovered. As an example of a configuration for recovering the protective film F, the electrode assembly manufacturing device 10 according to Embodiment 1 of the present disclosure may further include a film recovery unit 700. Specifically, the film recovery unit 700 may be configured so that the protective films F disposed on both surfaces of the assembly pressed by the pressing roll 600 are recovered.

The film recovery unit 700 may include a first film recovery unit 710 and a second film recovery unit 720. The first film recovery unit 710 may recover the protective film F provided from the first film providing unit 310, and the second film recovery unit 720 may recover the protective film F provided from the second film providing unit 320. Therefore, the heater 500, the pressing roll 600, and the film recovery unit 700 may be sequentially disposed along the direction in which the assembly moves.

As an example of a configuration for making the protective film F recovered through the film recovery unit 700 into a re-wound state, the electrode assembly manufacturing device 10 according to Embodiment 1 of the present disclosure may further include a first film winding unit 810 and a second film winding unit 820. The first film winding unit 810 may wind the protective film F recovered from the first film recovery unit 710, and the second film winding unit 820 may wind the protective film F recovered from the second film recovery unit 720.

The assembly in which the protective films F disposed on both surfaces are removed may be cut to a preset length. As an example of a configuration for cutting the assembly, the electrode assembly manufacturing device 10 according to Embodiment 1 of the present disclosure may further include a cutting unit 900. The cutting unit 900 may cut the assembly to a preset length after the protective film F is recovered from the film recovery unit 700.

One or more portions of the assembly cut to a preset length by the cutting unit 900 may be assembled to form an electrode assembly.

The electrode assembly manufacturing device 10 according to Embodiment 1 of the present disclosure may reduce the amount of discarded protective film F by reusing the protective film F wound together with the separator S. Through this, the efficiency and economic feasibility of the electrode assembly manufacturing process may be improved. Additionally, since the process for discarding the protective film F is omitted, the electrode assembly manufacturing device 10 may be applied to the manufacture of various types of electrode assemblies while minimizing the replacement of equipment. In addition, the electrode assembly manufacturing device 10 may efficiently prevent damage to the electrode and the separator S in the electrode assembly manufacturing process.

Meanwhile, the electrode assembly manufacturing device 10 according to Embodiment 1 of the present disclosure may include a transfer unit 330. The transfer unit 330 may be configured to transfer the electrode, the separator, and/or the protective film.

In this embodiment, the transfer unit 330 may be formed of a conveyor belt provided along the transfer direction of the electrode, the separator, and/or the protective film. The transfer unit 330 may be provided symmetrically with the electrode, the separator, and/or the protective film interposed therebetween. However, the specific configuration of the transfer unit 330 is not particularly limited as long as it may transfer the electrode, the separator, and/or the protective film.

### Embodiment 2

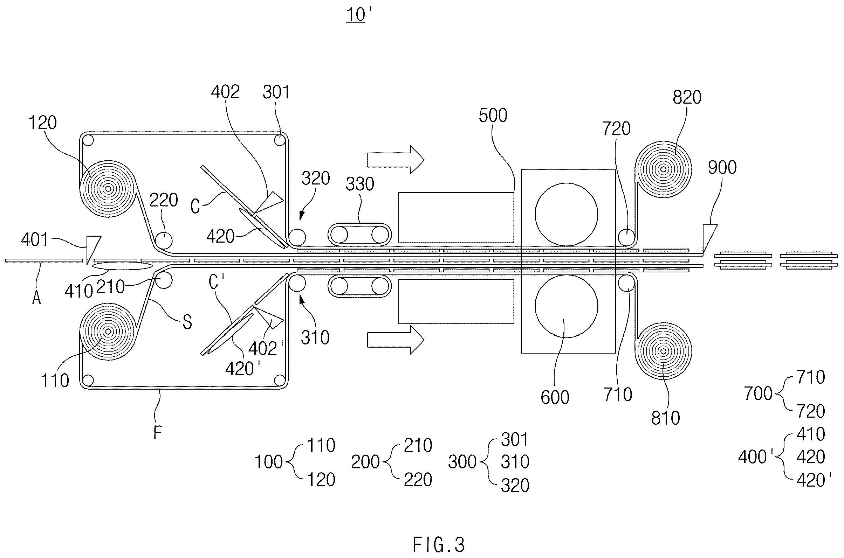

FIG. 3 is a side view schematically showing an electrode assembly manufacturing device 10' according to Embodiment 2 of the present disclosure.

Hereinafter, a detailed description of the same configuration as the configuration of the electrode assembly manufacturing device 10 according to Embodiment 1 of the present disclosure will be omitted, and differences will be mainly described in detail.

The electrode assembly manufacturing device 10' according to Embodiment 2 of the present disclosure may differ from the electrode assembly manufacturing device 10 according to Embodiment 1 of the present disclosure in the presence or absence of a configuration for further supplying second electrodes C, C'.

Referring to FIG. 3, the electrode assembly manufacturing device 10' according to Embodiment 2 of the present disclosure may supply second electrodes C, C' so that separators S are disposed on both surfaces of a first electrode A and the second electrodes C, C' are disposed on opposite sides of the first electrode A based on the separator S on both surfaces. Specifically, based on FIG. 3, the second electrode supply unit 420 may provide and move the second electrode C above the first electrode A, and the second electrode supply unit 420' may provide and move the second electrode C' below the first electrode A. Additionally, the electrode assembly manufacturing device 10' may further include a second electrode cutter 402' for cutting the second electrode C'.

The assembly existing between the manufacturing processes by the electrode assembly manufacturing device 10' according to Embodiment 2 of the present disclosure may be composed of two separators S, one first electrode A, and two second electrodes C, C'.

In this way, by changing some of the configurations of the electrode assembly manufacturing device according to the present disclosure, the assembly used for manufacturing the electrode assembly may be configured in various ways.

### Embodiment 3

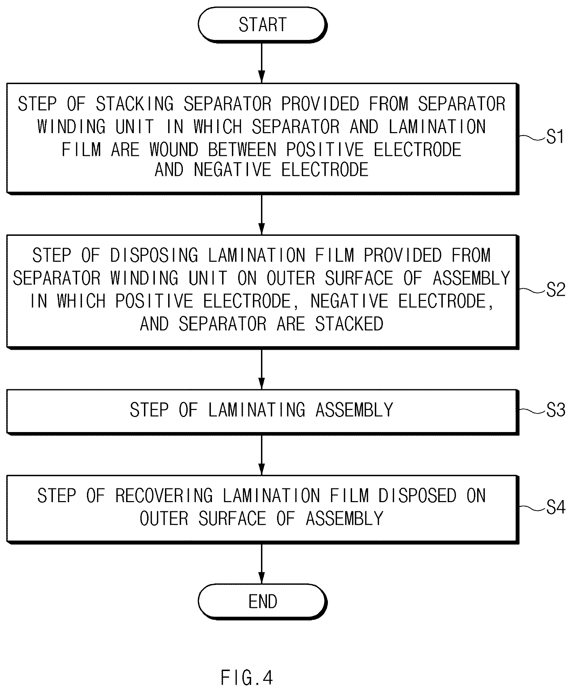

FIG. 4 is a flow chart schematically showing an electrode assembly manufacturing method according to Embodiment 3 of the present disclosure.

Hereinafter, a detailed description of the parts that can be understood from the contents described in Embodiments 1 and 2 of the present disclosure will be omitted.

An electrode assembly manufacturing method according to Embodiment 3 of the present disclosure may include a step of stacking the separator S between the moving first electrode A and second electrode C. Specifically, the electrode assembly manufacturing method may include a step S1 of stacking the separator S provided from a separator winding unit 100 in which the separator S and the protective film F are wound between the moving first electrode A and second electrode C. Therefore, the first electrode A and the second electrode C may be physically separated from each other by the separator S.

The electrode assembly manufacturing method may include a step S2 of stacking the protective film F provided from the separator winding unit 100 to be disposed on the outer surface of the assembly in which the first electrode A, the second electrode C, and the separator S are stacked.

In this regard, as the separator winding unit 100 is unwound, the separator S is provided, and the protective film F may be unwound together with the separator S. At this time, the protective film F unwound together with the separator S may be disposed on the outer surface of the assembly to protect the assembly in which the first electrode A, the second electrode C, and the separator S are stacked. Specifically, the protective films F may be disposed on both surfaces of the assembly.

To couple the first electrode A, the second electrode C, and the separator S, the electrode assembly manufacturing method may include a step S3 of laminating the assembly covered with the protective film F. At this time, heat and pressure may be applied for laminating the assembly. Here, the protective film F disposed on both surfaces of the assembly may prevent damage to the assembly by heat and pressure.

The electrode assembly manufacturing method may include a step S4 of recovering the protective film F disposed on both surfaces of the assembly after the assembly is laminated. After the protective film F is recovered, the assembly may be cut to a preset length, and one or more portions of the cut assembly may be assembled to form an electrode assembly.

In the electrode assembly manufacturing method according to Embodiment 3 of the present disclosure, the protective film F wound together with the separator S is not discarded, but may be utilized again during the process for protecting the assembly. Therefore, the efficiency and economic feasibility of the electrode assembly manufacturing process through the electrode assembly manufacturing method may be improved.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

- 10, 10':: Electrode assembly manufacturing device
- 100:: Separator winding unit
- 110:: First separator winding unit
- 120:: Second separator winding unit
- 200:: Separator providing unit
- 210:: First separator providing unit
- 220:: Second separator providing unit
- 300:: Film providing unit
- 301:: Film roll
- 310:: First film providing unit
- 320:: Second film providing unit
- 330:: Transfer unit
- 400, 400':: Electrode supply unit
- 401:: First electrode cutter
- 402, 402':: Second electrode cutter
- 410:: First electrode moving unit
- 420, 420':: Second electrode moving unit
- 500:: Heater
- 600:: Pressing roll
- 700:: Film recovery unit
- 710:: First film recovery unit
- 720:: Second film recovery unit
- 810:: First film winding unit
- 820:: Second film winding unit
- 900:: Cutting unit
- A:: First electrode
- C, C':: Second electrode
- F:: Protective film
- S:: Separator

## Claims

1. An electrode assembly manufacturing device, comprising:
a separator winding unit from which a separator and a protective film in a wound form may be unwound;
a separator providing unit configured to provide the separator unwound from the separator winding unit;
an electrode supply unit for supplying electrodes to the separator at regular intervals; and
a film providing unit configured to provide the protective film unwound from the separator winding unit to the electrode or the separator.

2. The electrode assembly manufacturing device according to claim 1,
wherein the electrode comprises a first electrode and a second electrode, and
the electrode supply unit further comprises:
a first electrode moving unit configured to move the first electrode in accordance with the speed at which the separator is provided by the separator providing unit; and
a second electrode moving unit configured to move the second electrode so that the second electrode is disposed on the opposite side of the first electrode based on the separator provided by the separator providing unit.

3. The electrode assembly manufacturing device according to claim 2,
wherein the separator winding unit comprises:
a first separator winding unit and a second separator winding unit that are disposed to be spaced apart from each other.

4. The electrode assembly manufacturing device according to claim 3,
wherein the separator providing unit comprises:
a first separator providing unit configured to dispose the separator unwound from the first separator winding unit on one surface of the moving first electrode; and
a second separator providing unit configured to dispose the separator unwound from the second separator winding unit on one surface of the moving second electrode.

5. The electrode assembly manufacturing device according to claim 4,
wherein the film providing unit comprises:
a first film providing unit configured to dispose the protective film on one surface of the separator coupled to one surface of the first electrode; and
a second film providing unit configured to dispose the protective film on the other surface of the second electrode,
wherein the protective films are provided to be disposed on both surfaces of the assembly composed of the first electrode, the second electrode, and the separator.

6. The electrode assembly manufacturing device according to claim 5, further comprising:
a heater configured to apply heat to the assembly in which the protective films are disposed on both surfaces.

7. The electrode assembly manufacturing device according to claim 6, further comprising:
pressing rolls configured to press the assembly heated by the heater on both surfaces to couple the first electrode, the second electrode, and the separator to each other.

8. The electrode assembly manufacturing device according to claim 7, further comprising:
a film recovery unit configured so that the protective film disposed on both surfaces of the assembly pressed by the pressing roll may be recovered.

9. The electrode assembly manufacturing device according to claim 8,
wherein the film recovery unit comprises:
a first film recovery unit configured so that the protective film provided from the first film providing unit may be recovered; and
a second film recovery unit configured so that the protective film provided from the second film providing unit may be recovered.

10. The electrode assembly manufacturing device according to claim 9, further comprising:
a first film winding unit configured to wind the protective film recovered from the first film recovery unit; and
a second film winding unit configured to wind the protective film recovered from the second film recovery unit.

11. The electrode assembly manufacturing device according to claim 8, further comprising:
a cutting unit configured to cut the assembly from which the protective film has been recovered to a preset length.

12. The electrode assembly manufacturing device according to claim 1,
wherein the film providing unit comprises:
a plurality of film rolls configured to guide the protective film unwound from the separator winding unit by rotation.

13. The electrode assembly manufacturing device according to claim 12,
wherein the film roll is configured to change the moving direction of the protective film.

14. The electrode assembly manufacturing device according to claim 2, further comprising:
a first electrode cutter configured to cut the first electrode moved by the first electrode moving unit to a preset length; and
a second electrode cutter configured to cut the second electrode moved by the second electrode moving unit to a preset length.

15. An electrode assembly manufacturing method, which is a method for manufacturing an electrode assembly comprising a first electrode, a second electrode, and a separator, the electrode assembly manufacturing method, comprising:
a step of stacking the separator provided from a separator winding unit in which the separator and the protective film are wound between the moving first electrode and second electrode;
a step of stacking the protective film provided from the separator winding unit to be disposed on the outer surface of the assembly in which the first electrode, the second electrode, and the separator are stacked;
a step of laminating the assembly covered with the protective film; and
a step of recovering the protective film disposed on the outer surface of the laminated assembly.
